# EUROPÄISCHE PATENTSCHRIFT

(11) **EP 1 019 263 B1**
(45) Veröffentlichungstag und Bekanntmachung des Hinweises auf die Patenterteilung: **28.11.2001**
(21) Anmeldenummer: 98951247.0
(22) Anmeldetag: 01.09.1998
(51) Int. Cl.: B60N 2/00

(54) **SITZMODUL FÜR EIN TRANSPORTMITTEL**
SEAT MODULE FOR A MEANS OF TRANSPORTATION
MODULE DE SIEGE POUR UN MOYEN DE TRANSPORT

(30) Priorität: 30.09.1997 DE 19743313
(43) Veröffentlichungstag der Anmeldung: 19.07.2000
(73) Patentinhaber: SIEMENS AKTIENGESELLSCHAFT, 80333 München (DE)
(72) Erfinder: SWART, Marten, D-93083 Obertraubling (DE); HÖSSL, Markus, D-93049 Regensburg (DE); FRANCIS, Kenneth, Rochester Hills, MI 48307 (US)
(86) Internationale Anmeldenummer: DE9802565
(87) Internationale Veröffentlichungsnummer: WO9916637

(56) Entgegenhaltungen:
- EP-A- 0 616 924
- DE-A- 4 120 650
- DE-A- 19 545 220
- FR-A- 2 758 502
- US-A- 5 368 355
- US-A- 5 413 378

## Beschreibung

Die Erfindung betrifft ein Sitzmodul für ein Transportmittel der im Oberbegriff der Patentansprüche 1 und 8 angegebenen Art, und insbesondere ein Sitzmodul für ein Kraftfahrzeug, sowie ein Verfahren zum Versorgen eines in einem Sitz angeordneten Verbrauchers mit Energie.

Ein solches Sitzmodul ist aus der Patentanmeldung DE 195 45 220 A1 bekannt. Ein Fahrzeugsitz und eine Karosserie sind gegeneinander linear bewegbar. Die Anordnung weist einen Übertrager auf, dessen Primär- und Sekundärwicklung in getrennten Schalenkernen liegen, von denen einer an der Karosserie und der andere am bewegbaren Fahrzeugsitz angebracht ist.

Die Patentschrift US 5,413,378 betrifft ein Sitzmodul mit mehreren Sensoren, die in einem Sitz eines Kraftfahrzeugs angeordnet und mit einem externen Steuergerät im Inneren des Fahrzeugs verbunden sind. Um eine elektrische Verbindung zwischen dem Steuergerät und den Sensoren im Sitz herzustellen, muß beim Einsetzen des Sitzes in eine Sitzführung zugleich über eine Steckverbindung eine elektrische Verbindung hergestellt werden. Hierzu ist ein verhältnismäßig umständlicher, manueller Arbeitsgang erforderlich. Eine solche Steckverbindung eignet sich nicht für moderne variable Fahrzeuge, bei denen ein Sitz vom Benutzer ausgebaut werden kann. Sowohl beim Ausbau als auch beim Einbau des Fahrzeugsitzes besteht die Gefahr, daß der Benutzer die Steckverbindung übersieht und so die elektrische Verbindung beschädigt oder nicht wiederherstellt.

Durch die Offenlegungsschrift DE 41 20 650 A1 ist eine Vorrichtung zur Übertragung von elektrischer Energie und Daten in Kraftfahrzeugen bekannt, bei der die im Lenkrad benötigte Energie auf induktivem Wege über Spulen eines Übertragers übertragen wird.

Es ist ein Ziel der Erfindung, ein Sitzmodul für ein Transportmittel und ein Verfahren bereitzustellen, bei denen beim Einbau eines Sitzes auf besonders einfache Weise eine elektrische Verbindung zwischen einem elektrischen Verbraucher im Sitz und einer außerhalb des Sitzes angeordneten Energieversorgung hergestellt werden kann.

Dieses Ziel wird durch ein Sitzmodul und durch ein Verfahren erreicht, wie sie in den unabhängigen Patentansprüchen 1, 8 und 9 definiert sind.

Über den induktiven Übertrager kann sowohl Energie als auch bidirektional Information in der in der Patentschrift EP 0 616 924 B1 beschriebenen Art übertragen werden.

Bei dem elektrische Verbraucher kann es sich beispielsweise um einen Sensor, eine Steuerung oder eine Auslöseeinheit handeln.

Da der Übertrager trennbar ausgeführt werden kann, eignet sich das Sitzmodul besonders gut für Kleinbusse, Großraumlimousinen, Vans, Mini-Vans oder Mehrzweckfahrzeuge, bei denen Sitze auf einfache Weise entfernbar und wieder einbaubar sein sollen. Daneben kann das erfindungsgemäße Sitzmodul auch in Massentransportmitteln wie Flugzeugen und Zügen eingesetzt werden, bei denen zunehmend elektrische Geräte in den Sitz integriert werden.

Weitere Merkmale, Vorteile und Anwendungsmöglichkeiten ergeben sich aus der nachfolgenden Beschreibung von Ausführungsbeispielen in Verbindung mit den Zeichnungen. Es zeigen:
- Figur 1: ein Sitzmodul,
- Figur 2: die Führung des Sitzmoduls von Figur 1,
- Figur 3: die Draufsicht auf eine Hälfte eines Übertragers,
- Figur 4: die Draufsicht auf rechteckige Übertragerhälften, die in einer Sitzführung angeordnet sind, und
- Figur 5: eine Vorderansicht der Sitzschiene von Figur 4 mit zwei übereinander angeordneten Übertragerhälften.

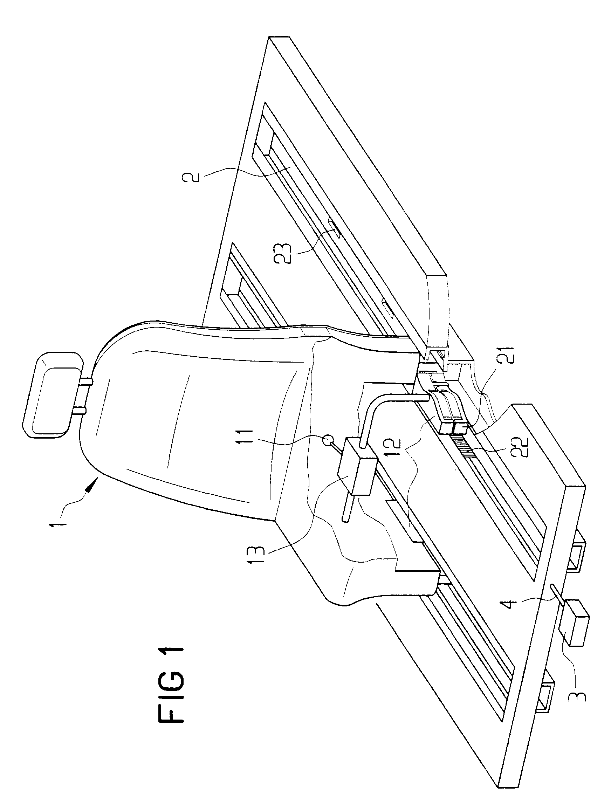

In Figur 1 ist ein Sitzmodul mit einem Sitz 1 dargestellt, der sich in einer schienenartigen Sitzführung 2 befindet. Während der dargestellte Sitz 1 in der Sitzführung 2 verschiebbar ist, sind insbesondere in Massentransportmitteln die Sitze in der Sitzführung regelmäßig nicht beweglich angeordnet.

Ein elektrischer Verbraucher 11, bei dem es sich um einen Sensor zur Sitzbelegungserkennung handelt, sendet über einen Übertrager 12, 21 Signale an eine externe Steuereinheit 3. Der elektrische Verbraucher 11 kommuniziert mit der externen Steuereinheit 3 über eine interne, im Sitz angeordnete Steuereinheit 13.

Die Übertragung von Energie von der externen Steuereinheit 3 zur internen Steuereinheit 13 und der bidirektionale Austausch von Information zwischen den beiden Steuereinheiten erfolgt wie in der Patentschrift EP 0 616 924 B1 eingehend beschrieben.

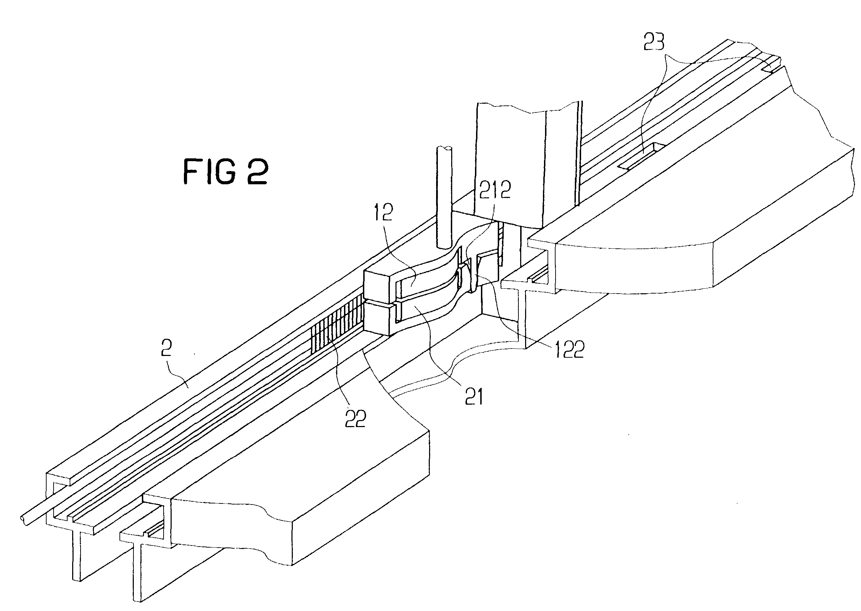

In Figur 2 ist die Führung des Sitzes 1 und des Übertragers 12, 21 veranschaulicht.

Die Sitzführung 2 weist eine untere Schiene zur Führung des Sitzes und eine obere Schiene zur Führung des Übertragers 12, 22 auf. Der Sitz kann in einer durch Aussparungen 23 gekennzeichneten Position aus- und eingebaut werden. Eine Übertragerhälfte 21, die die Primärwicklung 221 aufnimmt, ist als Gleitschlitten ausgebildet. Vor dem erstmaligen Einbau des Sitzes wird diese Übertragerhälfte 21 in Einbauposition gebracht. Der Sitz mit derjenigen Übertragerhälfte 12, die die Sekundärwicklung 121 aufnimmt, wird in die Aussparungen 23 der Sitzführung 2 eingesetzt. Dadurch wird die Übertragerhâlfte 12 auf die Übertragerhälfte 21 gesetzt und mechanisch gekoppelt. Ein Zapfen 122 des Gehäuses der Ubertragerhälfte 12 ragt in eine Ausnehmung oder Nut 212 des Gehäuses der Übertragerhälfte 21, wodurch beide Übertragerhälften gekoppelt sind.

Die Kopplung der Übertragerhälften 12, 21 ist in Bewegungsrichtung des Sitzes formschlüssig, so daß eine Bewegung des Sitzes in der Sitzführung 2 die Übertragerhälfte 21 mit der Primärwicklung 211 mitnimmt. Um eine Verschmutzung der Übertragergehäuse zu vermeiden, sind in der Sitzführung Reinigungsbürsten 22 angeordnet. Das Gehäuse der Übertragerhälften weist eine seitliche Wölbung auf, so daß ein Verkanten des Übertrages 12, 21 in der Sitzführung 2 ausgeschlossen ist.

Entlang der Sitzführung 2 verläuft ein Schleppkabel um eine elektrische Verbindung zwischen der Übertragerhälfte 21 und der externen Steuereinheit 3 herzustellen. Das Schleppkabel ist Teil der elektrischen Verbindung 4 zwischen dem elektrischen Verbraucher 11 im Sitz 1 und der externen Steuereinheit 3.

Beim Ausbau des Sitzes in der durch die Aussparung 23 definierten Position wird die Übertragerhälfte 12, die die Sekundärwicklung 121 aufnimmt, zusammen mit dem Sitz von der Übertragerhälfte 21, die die Primärwicklung aufnimmt, weggehoben. Wird der Sitz wieder eingebaut, wird die Übertragerhälfte 12 automatisch mit der Übertragerhälfte 21 verbunden. Ein Benutzer muß nicht daran denken, beim Ausbau des Sitzes einen Steckverbinder zu trennen und diesen beim Einbau wieder zu verbinden. Gerade letzteres kann leicht übersehen werden. Dadurch kann die korrekte Funktion eines Fahrzeuginsassen-Schutzsystems, wie Gurtspanner oder Airbag, beeinträchtigt sein.

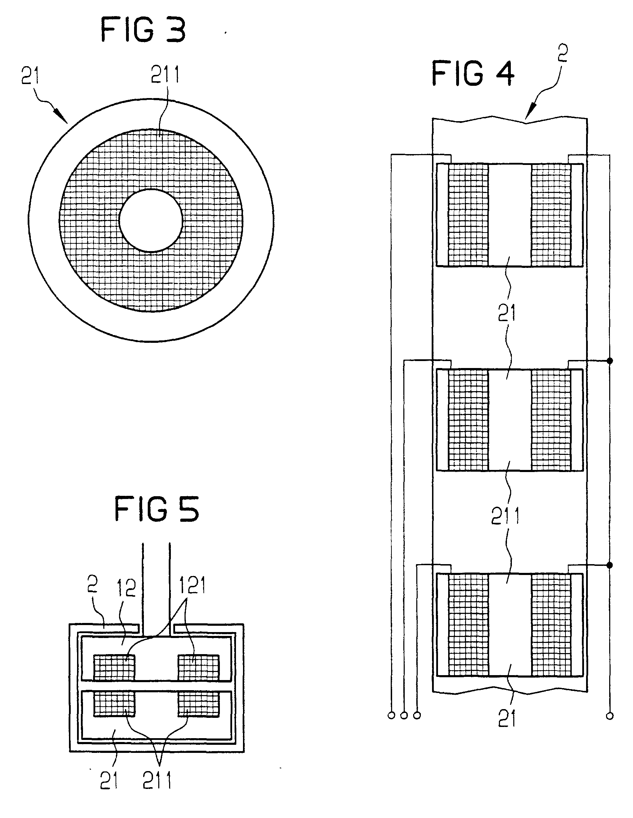

Figur 3 zeigt eine Übertragerhälfte 21 mit der Primärwicklung 211, wie sie im Gehäuse der Übertragerhälfte 21 in Figur 2 angeordnet ist. Diese Übertragerhälfte 21 ist genauso wie die Übertragerhälfte 12 rund oder topfförmig ausgebildet. Der Kern des Übertragers besteht aus Ferrit. Die Primärwicklung 211 umgibt einen zentralen Schenkel. Die Wicklung ist durch eine kreisförmige Außenwand begrenzt. Der Übertrager 12 mit der Sekundärwicklung 121 ist in derselben Weise aufgebaut.

Figur 4 veranschaulicht eine weitere Ausführungsform der Erfindung. In der schematisch dargestellten Sitzführung 2 sind in regelmäßigen Abständen voneinander beabstandet, rechteckförmige Übertragerhälften 21 mit jeweils einer Primärwicklung 211 fest eingebracht. Eine Übertragerhälfte 12 mit einer Sekundärwicklung 121 ist fest mit dem Sitz verbunden. Die Kontaktfläche des Übertragers 12 zu einem der Übertrager 21 erstreckt sich in Bewegungsrichtung des Sitzes über mindestens die doppelte Länge und vorzugsweise über die dreifache Länge der Kontaktfläche eines Übertragers 21 der Sitzführung. Auf diese Weise ist stets ein ausreichender Kontakt zwischen einer der Übertragerhälften 21 der Sitzführung 2 zu der Übertragerhälfte 12 des Sitzes gewährleistet.

Sobald in einem Kraftfahrzeug die Energieversorgung eingeschaltet wird, testet eine Steuereinheit, welche der Übertragerhälften 21 der Sitzführung 2 in Kontakt mit der Übertragerhälfte 12 des Sitzes ist. Hierzu werden die Wicklungen 211 der Übertragerhälften 21 der Sitzschiene 2 in einer definierten Reihenfolge mit einer Spannung beaufschlagt. Fließt ein Strom, der einen bestimmten Schwellenwert überschreitet, so befindet sich die betreffende Übertragerhälfte 12 des Sitzes in Kontakt mit der betreffenden Übertragerhälfte 21 der Sitzschiene 2. Lediglich über diese ausgewählte Übertragerhälfte 21 wird dem System Energie zugeführt und Information oder Daten ausgetauscht.

Durch die Erkennung, daß eine bestimmte Übertragerhälfte 21 der Sitzschiene 2 in Kontakt mit der Übertragerhälfte 12 des Sitzes ist, steht eine Information über die Position des Sitzes zur Verfügung. Diese Information kann beispielsweise bei einem Unfall zur Steuerung eines Airbags genutzt werden.

Figur 5 zeigt eine Übertragerhälfte 21 der Sitzführung 2 von Figur 4, die in Kontakt mit der Übertragerhälfte 12 des Sitzes ist. Wie der Übertrager in Figur 3, basiert auch der Übertrager von Figur 5 auf dem Prinzip des Manteltransformators. Die Primärwicklung 211 und die Sekundärwicklung 121 liegen jeweils auf demselben durch einen Luftspalt getrennten Schenkel.

Wenn der Sitz 1 in unterschiedlichen Richtungen eingebaut werden kann, also beispielsweise in Fahrtrichtung und gegen die Fahrtrichtung, so ist es sinnvoll, am Sitz Übertragerhälften 12 an gegenüberliegenden Seiten zu befestigen. Auf diese Weise kommt eine induktive Kopplung zu einer in der Sitzführung 2 eingebauten Primärwicklung 211 unabhängig von der Einbaurichtung des Sitzes zustande. In diesem Fall ist es günstig, wenn die interne, im oder am Sitz eingebaute Steuereinheit 13 der externen Steuereinheit 3 signalisiert, mit welcher der beider Übertragerhälften 12 des Sitzes eine magnetische Kopplung zum Übertrager 21 der Sitzschiene 2 besteht. Diese Information gibt die Einbaurichtung des Sitzes wieder und kann zur Steuerung eines Fahrzeuginsassen-Schutzsystems, wie beispielsweise Gurtstraffer oder Airbag, verwendet werden.

Daneben erkennt das System anhand einer zum Testen auf die Primärwicklung 211 beaufschlagten Spannung, ob ein Sitz eingebaut ist, oder nicht. Dasselbe wird erreicht, wenn die externe Steuereinheit 3 zyklische Abfragen an die interne Steuereinheit 13 macht. Ein unnötiges Auslösen von Sicherheitsmechanismen bei einem Unfall kann daher vermieden werden.

## Patentansprüche

1. Sitzmodul für ein Transportmittel, das aufweist:
- einen Sitz (1),
- eine Sitzführung (2),
- wenigstens einen im Sitz installierten elektrischen Verbraucher (11),
- eine elektrische Verbindung (4) zwischen dem elektrischen Verbraucher (11) und einer externen Steuereinheit (3) auβerhalb des Sitzes (1) zur Übertragung von Energie und Information, wobei
- die elektrische Verbindung (4) einen induktiven Übertrager (12, 21) mit einer Primärwicklungen (211) und mit einer Sekundärwicklung (121) aufweist,
- die Primärwicklung (211) des Übertragers (12, 21) an der Sitzführung (2) angebracht ist und die Sekundärwicklung (121) des Übertragers (12, 21) mit dem Sitz (1) verbunden ist,
**dadurch gekennzeichnet, daß**
- die Primärwicklung (211) und die Sekundärwicklung (121) in separaten, miteinander mechanisch koppelbaren und entkoppelbaren Gehäusen angeordnet sind.

2. Sitzmodul nach Anspruch 1, **dadurch gekennzeichnet, daß** der Sitz eine interne Steuereinheit (13) aufweist, die mit wenigstens einem elektrischen Verbraucher (11) verbunden ist.

3. Sitzmodul nach einem der vorhergehenden Ansprüchen, **dadurch gekennzeichnet, daß** der Sitz (1) mehrere elektrische Verbraucher (11) aufweist, und daß den elektrischen Verbrauchern zuordenbare Daten seriell über den Übertrager (12, 21) übertragen werden.

4. Sitzmodul nach einem der vorhergehenden Ansprüchen, **dadurch gekennzeichnet, daß** der Sitz (1) zusammen mit der Sekundärwicklung (121) aus der Sitzführung (2) herausnehmbar ist.

5. Sitzmodul nach einem der vorhergehenden Ansprüche, **dadurch gekennzeichnet, daß** der Übertrager (12, 21) bei einer Bewegung des Sitzes (1) entlang der Sitzführung (2) beweglich ist.

6. Sitzmodul nach einem der vorhergehenden Ansprüche, **dadurch gekennzeichnet, daß** eine Wicklung (12, 21) ein Gehäuse aufweist, das gegenüber der Sitzführung (2) gewölbt ist.

7. Sitzmodul nach einem der vorhergehenden Ansprüche, **dadurch gekennzeichnet, daß** der Sitz (1) auf gegenüberliegenden Seiten jeweils eine Sekundärwicklung (121) aufweist, so daß auch bei einem Verdrehen des Sitzes (1) um 180° eine elektromagnetische Kopplung mit der an der Sitzführung (2) angebrachten Primärwicklung (211) besteht.

8. Sitzmodul für ein Transportmittel, das aufweist:
- einen Sitz (1),
- eine Sitzführung (2),
- wenigstens einen im Sitz installierten elektrischen Verbraucher (11),
- eine elektrische Verbindung (4) zwischen dem elektrischen Verbraucher (11) und einer externen Steuereinheit (3) außerhalb des Sitzes (1) zur Übertragung von Energie und Information, wobei
- die Primärwicklungen (211) des Übertragers (12, 21) an der Sitzführung (2) angebracht sind,
- die Sekundärwicklung (121) des Übertragers (12, 21) mit dem Sitz (1) verbunden ist,
**dadurch gekennzeichnet, daß**
- die elektrische Verbindung (4) einen induktiven Übertrager (12, 21) mit einer Vielzahl von voneinander beabstandeten Primärwicklungen (211) und mit einer Sekundärwicklung (121) aufweist,
- die Primärwicklungen (211) des Übertragers (12, 21) in einer definierten Reihenfolge mit einer Spannung beaufschlagbar sind und die Position des Sitzes (1) anhand des Stromflusses detektierbar ist.

9. Verfahren zum Versorgen eines in einem Sitz (1) angeordneten Verbrauchers (11) mit Energie und zur Positionsbestimmung des Sitzes (1), mit den Schritten:
- der Sitz (1) wird mit einer Übertragerhälfte (12), die eine Sekundärwicklung (121) aufweist, in eine Sitzführung (2) eingesetzt,
**dadurch gekennzeichnet, daß**
- die Sitzführung eine Vielzahl von voneinander beabstandeten Übertragerhälften (21) mit Primärwicklungen (211) aufweist, mit denen eine elektrische Verbindung mit der Sekundärwicklung (121) hergestellt wird,
- die Primärwicklungen (211) in einer definierten Reihenfolge mit einer Spannung beaufschlagt werden,
- die Position des Sitzes (1) anhand des Stromflusses durch eine Primärwicklung (211) einer Übertragerhälfte (21) bestimmt wird.

## Claims

1. Seat module for a means of transportation which has:
- a seat (1),
- a seat guide (2),
- at least one electrical load (11) installed in the seat, and
- an electrical connection (4) between the electrical load (11) and an external control unit (3) outside the seat (1) for transmitting power and information, where
- the electrical connection (4) has an inductive transformer (12, 21) with a primary winding (211) and with a secondary winding (121),
- the primary winding (211) of the transformer (12, 21) is mounted on the seat guide (2), and the secondary winding (121) of the transformer (12, 21) is connected to the seat (1),
**characterized in that**
- the primary winding (211) and the secondary winding (121) are arranged in separate housings which can be coupled and decoupled mechanically to and from one another.

2. Seat module according to Claim 1, **characterized in that** the seat has an internal control unit (13) which is connected to at least one electrical load (11).

3. Seat module according to one of the preceding claims, **characterized in that** the seat (1) has a plurality of electrical loads (11), and **in that** data which can be assigned to the electrical loads are transmitted serially via the transformer (12, 21).

4. Seat module according to one of the preceding claims, **characterized in that** the seat (1), together with the secondary winding (121), can be removed from the seat guide (2).

5. Seat module according to one of the preceding claims, **characterized in that**, when the seat (1) moves, the transformer (12, 21) can move along the seat guide (2).

6. Seat module according to one of the preceding claims, **characterized in that** a winding (12, 21) has a housing which is curved with respect to the seat guide (2).

7. Seat module according to one of the preceding claims, **characterized in that** the seat (1) has a respective secondary winding (121) on opposite sides, with the result that even when the seat (1) rotates through 180° there is an electromagnetic coupling to the primary winding (211) mounted on the seat guide (2).

8. Seat module for a means of transportation which has:
- a seat (1),
- a seat guide (2),
- at least one electrical load (11) installed in the seat,
- an electrical connection (4) between the electrical load (11) and an external control unit (3) outside the seat (1) for transmitting power and information, where
- the primary windings (211) of the transformer (12, 21) are mounted on the seat guide (2), and
- the secondary winding (121) of the transformer (12, 21) is connected to the seat (1),
**characterized in that**
- the electrical connection (4) has an inductive transformer (12, 21) with a multiplicity of spaced-apart primary windings (211) and with a secondary winding (121),
- the primary windings (211) of the transformer (12, 21) can be supplied in a defined sequence with a voltage, and the position of the seat (1) can be detected by reference to the current.

9. Method for supplying a load (11) arranged in a seat (1) with power and for determining the position of the seat (1), having the steps:
- the seat (1) is inserted by one transformer half (12) which has a secondary winding (121), into a seat guide (2),
**characterized in that**
- the seat guide has a plurality of transformer halves (21) which are spaced apart from one another and have primary windings (211), with which an electrical connection to the secondary winding (121) is brought about,
- the primary windings (211) are supplied with a voltage in a defined order,
- the position of the seat (1) is determined by means of the current through a primary winding (211) of a transformer half (21).

## Revendications

1. Module de siège pour un engin de transport, qui présente:
- un siège (1),
- un guidage de siège (2),
- au moins un consommateur électrique (11) monté dans le siège,
- une liaison électrique (4) entre le consommateur électrique (11) et une unité de commande externe (3) située à l'extérieur du siège (1) pour transmettre de l'énergie et des informations,
- la liaison électrique (4) présentant un transmetteur inductif (12, 21) comportant un enroulement primaire (211) et un enroulement secondaire (121),
- l'enroulement primaire (211) du transmetteur (12, 21) étant adapté sur le guidage de siège (2) et l'enroulement secondaire (121) du transmetteur (12, 21) étant relié au siège (1),
**caractérisé en ce que**
- l'enroulement primaire (211) et l'enroulement secondaire (121) sont disposés dans des boîtiers séparés, pouvant être accouplés et découplés mécaniquement l'un avec l'autre.

2. Module de siège suivant la revendication 1, **caractérisé en ce que** le siège présente une unité de commande interne (13) qui est reliée à au moins un consommateur électrique (11).

3. Module de siège suivant l'une des revendications précédentes, **caractérisé en ce que** le siège (1) présente plusieurs consommateurs électriques (11), et **en ce que** des données associées aux consommateurs électriques sont transmises en série au moyen du transmetteur (12, 21).

4. Module de siège suivant l'une des revendications précédentes, **caractérisé en ce que** le siège (1) peut être retiré du guidage du siège (2), ensemble avec l'enroulement secondaire (121).

5. Module de siège suivant l'une des revendications précédentes, **caractérisé en ce que** le transmetteur (12, 21), lors d'un mouvement du siège (1), peut se déplacer le long du guidage de siège (2).

6. Module de siège suivant l'une des revendications précédentes, **caractérisé en ce qu'**un enroulement (12, 221) présente un boîtier, qui présente une courbure en face du guidage de siège (2).

7. Module de siège suivant l'une des revendications précédentes, **caractérisé en ce que** le siège (1) présente sur des faces en regard, chaque fois un enroulement secondaire (121), de telle façon que même en cas de rotation du siège (1) de 180°, il existe un accouplement électromagnétique avec l'enroulement primaire (211) adapté sur le guidage de siège (2).

8. Module de siège pour un engin de transport, qui présente:
- un siège (1),
- un guidage de siège (2),
- au moins un consommateur électrique (11) monté dans le siège,
- une liaison électrique (4) entre le consommateur électrique (11) et une unité de commande externe (3) située à l'extérieur du siège (1) pour transmettre de l'énergie et des informations,
- les enroulements primaires (211) du transmetteur (12, 21) étant adaptés sur le guidage du siège (2),
- l'enroulement secondaire (121) du transmetteur (12, 21) étant relié au siège (1),
**caractérisé en ce que**
- la liaison électrique (4) présente un transmetteur inductif (12, 21) comportant une multiplicité d'enroulements primaires (211) disposés à une certaine distance les uns des autres, et comportant un enroulement secondaire (121),
- une tension peut être appliquée sur les enroulements primaires (211) du transmetteur (12, 21) suivant un ordre de succession défini et la position du siège (1) pouvant être détectée à l'aide du courant.

9. Procédé pour alimenter en énergie un consommateur (11) monté dans un siège (1) et pour déterminer la position du siège (1), comportant les étapes suivantes:
- le siège (1) est installé dans un guidage de siège (2) avec une moitié de transmetteur (12), qui présente un enroulement secondaire (121),
**caractérisé en ce que**
- le guidage de siège présente une multiplicité de moitiés de transmetteur (21) disposés à une certaine distance les unes des autres, avec des enroulements primaires (211), avec lesquels une liaison électrique est établie avec l'enroulement secondaire (121),
- une tension est appliquée aux enroulements primaires (211) suivant un ordre de succession défini,
- la position du siège (1) est déterminée à l'aide du courant, au moyen d'un enroulement primaire (211) d'une moitié de transmetteur (21).
